# EUROPÄISCHE PATENTSCHRIFT

(11) **EP 0 531 760 B1**
(45) Veröffentlichungstag und Bekanntmachung des Hinweises auf die Patenterteilung: **17.04.1996**
(21) Anmeldenummer: 92114116.4
(22) Anmeldetag: 19.08.1992
(51) Int. Cl.: A01D 41/14

(54) **Erntemaschine**
Harvesting machine
Machine de moissonnage

(30) Priorität: 28.08.1991 DE 4128475
(43) Veröffentlichungstag der Anmeldung: 17.03.1993
(73) Patentinhaber: DEERE & COMPANY, Moline, Illinois 61265 (US)
(72) Erfinder: Winkels, Günter, W-6660 Zweibrücken (DE); Schlachter, Jürgen, W-6663 Dellfeld (DE)
(74) Vertreter: Feldmann, Bernhard

(56) Entgegenhaltungen:
- BE-A- 622 446
- DE-A- 2 830 794
- DE-A- 3 240 791
- DE-A- 3 515 126
- FR-A- 2 324 219
- US-A- 3 886 718

## Beschreibung

Die Erfindung betrifft eine Erntemaschine, vorzugsweise Mähdrescher, mit einem Vorsatz, der höhenbeweglich an einem Rahmen angreift, und mit mindestens einer längenveränderlichen Strebe, die einenends an dem Vorsatz und anderenends über einen Bolzen in einem Lager am Rahmen gehalten ist. Eine derartige Erntemaschine ist aus der DE-A-2 830 794 bekannt.

Erntemaschinen, insbesondere Mähdrescher und Feldhäcksler, weisen Erntegutbergungsvorsätze auf, die mittels Hydraulikmotoren in der Höhe verstellbar sind. Unter bestimmten Einsatzverhältnissen ist es erforderlich, diese Erntegutbergungsvorsätze ganz auf den Boden abzusenken und mit nur geringer Auflagekraft auf dem Boden entlang zu führen. Um Bodenunebenheiten ausweichen zu können, sind in der Zuleitung zu den Hydraulikmotoren oder zwischen den Hydraulikmotoren und den Erntegutbergungsvorsätzen mechanische oder pneumatische Federsysteme vorgesehen, die bewirken, daß sich die Erntegutbergungsvorsätze leicht anheben und somit eine zu hohe Bodenauflagekraft vermeiden. Zum Teil wird auch mittels einer Druckanzeige einer Bedienungsperson mitgeteilt, wie hoch die momentane Auflagekraft ist, so daß eine manuelle Höhensteuerung vorgenommen werden kann. All diese Möglichkeiten der Höhenverstellung eines Vorsatzes an Erntemaschinen haben den Nachteil, daß sie nicht sensibel genug sind und somit auf geringe Änderungen in der Auflagekraft gar nicht oder zu spät reagieren.

Es ist darüberhinaus bei Ackerschleppern bekannt [Bosch-Hydraulik, Ergänzende Produktinformation, K6/VKD 2 - BEY 005/5 De (5.82)], die Höhe eines an eine Dreipunktgerätekupplung angekoppelten und in den Boden eindringenden Gerätes mittels eines elektronischen Kraftsensors, der in einen Bolzen integriert ist, zu steuern. In einer außerordentlich hohen Zahl von Druckschriften werden Weiterentwicklungen derartiger Kraftsensoren in der Anwendung bei Ackerschleppern beschrieben; beispielhaft wird hierzu auf die EP-A1-0 238 875, die DE-A1-35 15 126 und die DE-A1-34 34 131 verwiesen.

Die der Erfindung zugrunde liegende Aufgabe wird darin gesehen, eine Erntemaschine mit einem Vorsatz vorzuschlagen, dessen Höhe sich in Abhängigkeit von der Kontur der Bodenoberfläche auf einfache Weise, bei geringen Auflagedruckänderungen und ohne nennenswerte Verzögerung automatisch einstellt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann aus dem Widerstand des Vorsatzes während seiner Bewegung über den Boden, der in direkter Abhängigkeit zu seiner Auflagekraft steht, ein elektronisches Ausgangssignal gewonnen werden, das in einer Regel- oder Steuervorrichtung verarbeitet wird und ein Hydraulikventil steuert, das eine Längenveränderung der Strebe und somit eine Höhenänderung des Vorsatzes einleitet. Die Verwendung einer elektronischen Regelung gewährt eine äußerst schnelle Reaktion auf Bodenunebenheiten und läßt Reibungskräfte in der Strebe weitgehend ohne Einfluß.

Wenn auch der Bolzen mit dem Kraftmeßsensor auf verschiedene Weise, z. B. in axialer Ausrichtung zu der Strebe, eingebaut werden könnte, ist es sinnvoll, ihn so einzusetzen, daß die auf ihn gerichteten Kräfte radial wirken, so daß er gleichzeitig als Schwenklager dienen kann.

Bei sehr breiten Vorsätzen ist es möglich, daß sie von einer Bodenunebenheit nur an einer Seite oder nur in der Mitte angehoben werden. Um zu vermeiden, daß eine daraufhin entstehende Auflagekraftänderung ohne Einfluß bleibt, ist die Verwendung mehrerer Streben und mehrerer Bolzen mit Kraftmeßsensoren vorgesehen. Diese Kraftmeßsensoren werden vorzugsweise mittels eines Kleinrechners so geschaltet, daß eine Erhöhung der angreifenden Kraft an nur einem Bolzen bereits zum Anheben des Vorsatzes führt, während zum Absenken des Vorsatzes eine Kraftminderung an allen Kraftmeßsensoren erforderlich ist. Allerdings muß nicht jede Strebe auf einen Kraftmeßsensor wirken.

Sind die Streben unterschiedlich ausgebildet, so daß sie sowohl unterschiedlich hohe Kräfte aufnehmen als auch einleiten können, wird eine einwandfreie Funktion der Regelung jedenfalls sichergestellt, wenn eine Kompatibilität der jeweils zu bildenden Signale sichergestellt wird, was durch die Verwendung unterschiedlicher Kraftmeßsensoren oder eine Verstärkung bzw. Dämpfung des Signals in einem Anpassungskreis vorgenommen wird.

Eine äußerst geringe Reaktionszeit, die zu einer annähernd stets gleich großen Auflagekraft führt, wird erreicht, wenn die Sensibilität des Kraftmeßsensors in Verbindung mit der Regelvorrichtung bereits bei einer Spannungsänderung von 15 mV liegt.

Um einer Bedienungsperson die Möglichkeit zu geben, auch an einem Feldende oder beim Vorliegen bestimmter Umstände die Höhe des Vorsatzes manuell zu ändern, ist eine Überbrückungsschaltung vorgesehen.

Um auch die Einflüsse der Lagerreibung der Strebe(n) und des Vorsatzes in der Lagerung an dem Rahmen weitestmöglich herabzusetzen, ist vorgesehen, Nadellager bzw. Gelenklager zu verwenden.

Insbesondere die Verwendung eines elektronischen Kraftsensors der Baureihe HITCH-TRONIC Typ KS 5 der Fa. Robert Bosch GmbH führt zu einer einfachen Installation einer elektronischen Regelung der Höhe des Vorsatzes einer Erntemaschine.

In der Zeichnung ist ein nachfolgend näher beschriebenes Ausführungsbeispiel der Erfindung dargestellt. Es zeigt:
- Fig. 1: eine erfindungsgemäße Erntemaschine in Seitenansicht und
- Fig. 2: einen Regelkreis für die Erntemaschine.

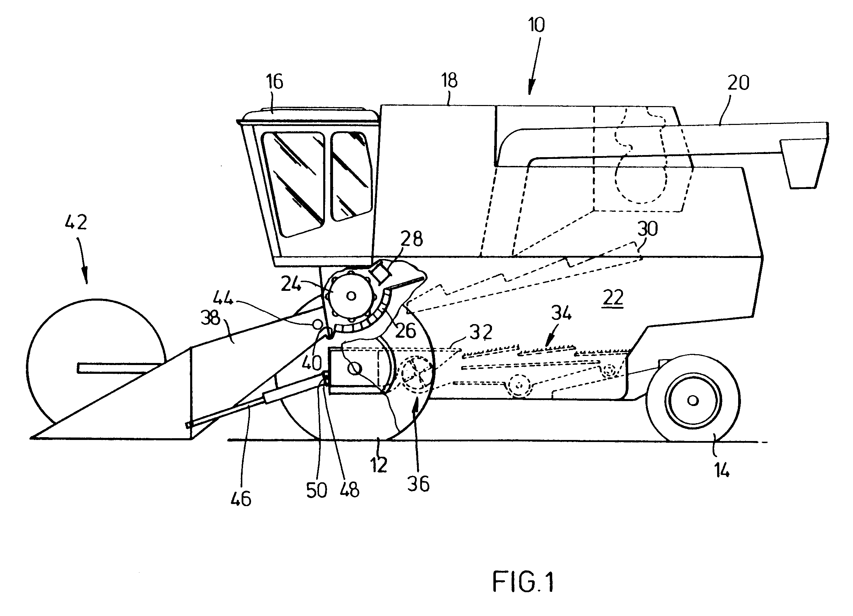

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso ein Feldhäcksler, ein Baumwollpflücker oder eine Ballenpresse in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zuführt, nachdem es von einem Vorsatz 42 aufgenommen worden ist.

Dieser Vorsatz 42 ist gegenüber dem Rahmen 22 höhenbeweglich in einer Lagerung 44 gehalten und stützt sich mittels mehrerer Streben 46, von denen in der Zeichnung nur eine zu sehen ist, an einem Lager 48 an dem Rahmen 22 ab. Quer zur Fahrtrichtung der Erntemaschine 10 erstreckt sich durch das Lager 48 ein Bolzen 50 zur schwenkbeweglichen Verbindung mit der Strebe 46.

Bei dem Vorsatz 42 kann es sich um ein Schneidwerk, eine Pick-Up, einen Maispflücker oder eine sonstige Erntebergungsvorrichtung für Sonderkulturen handeln und kann unterschiedliche Abstände zu dem Boden einnehmen, um entweder das aufzunehmende Gut in verschiedenen Höhen vom Boden aufzunehmen oder um am Feldende in eine Transportstellung gebracht werden zu können. Schließlich kann er auf den Boden abgesenkt werden und mit geringer Auflagekraft auf diesem entlang gleiten, wobei er den Bodenkonturen folgt.

Die Lagerung 44 kann als Gleitlager ausgebildet sein, sie kann aber zur Herabsetzung des Reibwiderstandes mit einem nicht gezeigten Nadellager versehen werden. Die Lagerung 44 nimmt den Schrägförderer 38 mit dem starr an ihn angeschlossenen Vorsatz 42 auf beiden Seiten vertikal schwenkbar auf und befindet sich oberhalb des Lagers 48.

Die Strebe 46 ist in diesem Ausführungsbeispiel als ein einfach wirkender Hydraulikmotor mit einem Zylinder und einem darin verschiebbaren Kolben ausgebildet, der mittels eines später beschriebenen Regelkreises 52 in seiner wirksamen Länge verändert werden kann. An ihrem in der Zeichnung links gelegenen Ende ist die Strebe 46 an dem Vorsatz 42 schwenkbar befestigt, während sie mit ihrem rechten Endbereich mittels des Bolzens 50 in dem Lager 48 schwenkbar aufgenommen ist. Allerdings könnte es sich bei der Strebe 46 auch um eine Elektrospindel oder einen Pneumatikmotor handeln.

Das Lager 48 ist herkömmlich in der Art einer Gabel mit zwei Schenkeln ausgebildet, die zwischen sich den in der Zeichnung rechten Endbereich der Strebe 46 mittels des Bolzens 50 schwenkbar aufnehmen. Das Lager 48 ist in dem speziellen Ausführungsbeispiel an einer Vorderachse der Erntemaschine 10 befestigt.

Der Bolzen 50 durchdringt drei in den Schenkeln des Lagers 48 und in dem rechten Endbereich der Strebe 46 konzentrisch zueinander verlaufende Bohrungen und ist in seinem Innern mit einem nicht gezeigten Kraftmeßsensor versehen. Bei dem Bolzen 50 handelt es sich vorzugsweise um einen elektronischen Kraftsensor der Baureihe HITCH-TRONIC Typ KS 5 der Fa. Robert Bosch GmbH. Allerdings kann eine Vielzahl anderer ebenfalls handelsüblicher Bolzen 50 mit Kraftmeßsensoren verwendet werden, die die angreifende Kraft auch in anderer Weise ermitteln und in ein Ausgangssignal umwandeln.

Es wird darauf hingewiesen, daß in der Zeichnung jeweils nur eine Lagerung 44, eine Strebe 46, ein Lager 48 und ein Bolzen 50 zu sehen sind. In der Verwirklichung der Erfindung ist wenigstens die doppelte Anzahl dieser Komponenten vorgesehen und zwar auf jeder Seite des Schrägförderers 38 ein Satz mit Blick in der Längsrichtung der Erntemaschine 10, wobei jedoch nicht jeder Bolzen 50 mit einem Kraftmeßsensor versehen sein muß. Darüberhinaus können auch drei Streben 46, drei Lager 48 und drei Bolzen 50 vorgesehen werden, wenn dies aufgrund des Gewichts des Vorsatzes 42 erforderlich sein sollte, wobei die Streben 46 und die Bolzen 50 in solch einem Fall auch unterschiedlich ausgebildet werden können.

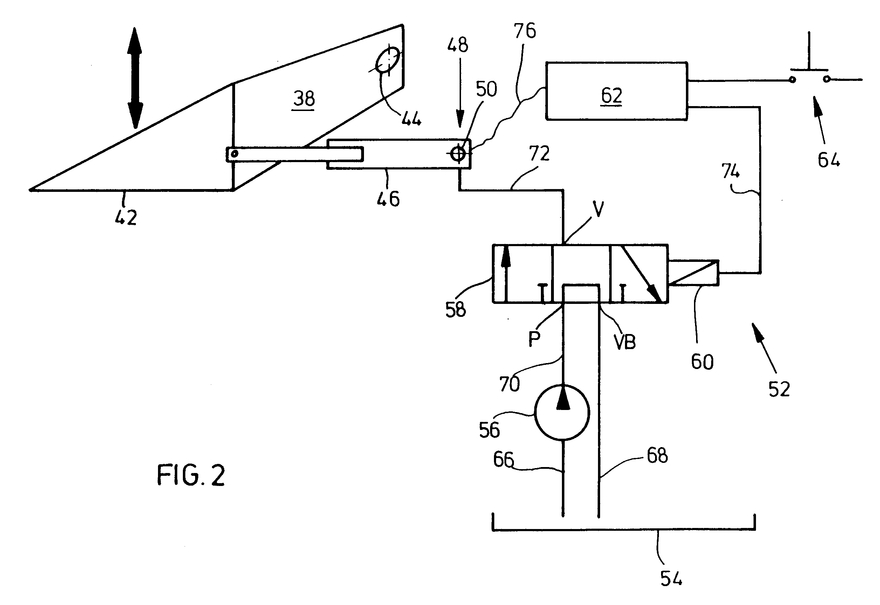

Im folgenden wird Bezug auf die Darstellung in Figur 2 genommen, die den Regelkreis 52 zur Verstellung der Strebe(n) 46 zeigt.

Der Regelkreis 52 enthält einen Vorratsbehälter 54, eine Pumpe 56, ein Ventil 58, ein Magnetventil 60, eine Regelvorrichtung 62, einen Schalter 64 und mehrere diese untereinander verbindende hydraulische bzw. elektrische Leitungen.

Der Vorratsbehälter 54 dient in diesem Ausführungsbeispiel der Aufnahme von Hydrauliköl zur Abgabe an die Pumpe 56 über eine Leitung 66 und zu dessen Aufnahme von der Strebe 46 über das Ventil 58 und eine Leitung 68.

Die Pumpe 56 ist als eine konstant fördernde und von einem nicht gezeigten Motor angetriebene Pumpe ausgebildet und führt Druckflüssigkeit über eine Leitung 70 einem Pumpenanschluß P des Ventils 58 zu. Dazwischen kann ein nicht gezeigtes Druckbegrenzungsventil vorgesehen werden.

Das Ventil 58 ist als ein 3/3-Ventil (drei Stellungen und drei Anschlüsse) ausgebildet, das mittels des Elektromagneten 60 gesteuert wird. Auf der Seite des Pumpenanschlusses P befindet sich ein Vorratsbehälteranschluß B, an den die Leitung 68 angeschlossen ist. Gegenüber dem Pumpenanschluß P und dem Vorratsbehälteranschluß B befindet sich ein Verbraucheranschluß V, in den eine zu der Strebe 46 führende Leitung 72 mündet. In einer ersten und mittig gelegenen Neutralstellung fördert die Pumpe 56 in den Vorratsbehälter 54, und die Leitung 72 ist blockiert. In einer zweiten und in der Zeichnung links gelegenen Zuflußstellung fördert die Pumpe 56 zu der Strebe 46, und der Vorratsbehälteranschluß B ist gesperrt, und in einer dritten, sogenannten Abflußstellung fließt Druckmittel aus der Strebe 46 zurück zu dem Vorratsbehälter 54, während der Pumpenanschluß P gesperrt ist.

Der Elektromagnet 60 wird seitens der Regelvorrichtung 62 gesteuert und vermag das Ventil 58 in seine genannten Stellungen zu bringen. Hierzu ist er über eine Elektroleitung 74 mit der Regelvorrichtung 62 zum Empfang eines Steuersignals verbunden. Anstatt eines Elektromagneten können auch mehrere oder zusätzlich eine Rückstellfeder vorgesehen werden.

Die Regelvorrichtung 62 ist vorzugsweise in elektronischer Bauweise und möglichst programmierbar ausgeführt. Sie erhält ein Eingangssignal über eine Elektroleitung 76 von dem Kraftmeßsensor des Bolzens 50. Auf diese Weise kann sie aus der erhaltenen Signalstärke, die in direktem oder umgekehrten Verhältnis zu der sich auf dem Bolzen 50 abstützenden Kraft steht, ein Ausgangs- oder Steuersignal bilden, das den Elektromagneten 60 aktiviert und somit das Ventil 58 in die eine oder die andere Richtung verschiebt. In dieser Regelvorrichtung 62 können je nach den zu berücksichtigenden Gegebenheiten ein Korrekturkreis, ein Verzögerungskreis, ein Verstärkungskreis, eine Schwellwertabfrage oder dergleichen vorgesehen werden, um eine einwandfreie Verarbeitung des von dem Kraftmeßsensor erfaßten Signals sicher zu stellen.

Der Schalter 64 dient dazu, in der Regelvorrichtung 62 den Verarbeitungsvorgang des Eingangssignals zu umgehen und das Elektromagnetventil 60 manuell zu steuern, wie dies aus den vorgenannten Gründen erforderlich sein kann. Darüberhinaus kann die Regelvorrichtung 62 mit einem Ein/Aus-Schalter versehen werden.

Nach alledem ist ersichtlich, daß je nach der Größe des an dem Kraftmeßsensor des Bolzens 50 erfaßten Kraft in der Regelvorrichtung 62 ein Ausgangs- oder Steuersignal erzeugt wird, das zu einer Aktivierung des Elektromagneten 60 und somit zu einer Verstellung des Ventils 58 führt.

## Patentansprüche

1. Erntemaschine (10), vorzugsweise Mähdrescher, mit einem Vorsatz (42), der höhenbeweglich an einem Rahmen (22) angreift, und mit mindestens einer längenveränderlichen Strebe (46), die einenends an dem Vorsatz (42) und anderenends über einen Bolzen (50) in einem Lager (48) am Rahmen (22) gehalten ist, dadurch gekennzeichnet, daß der Bolzen (50) einen Kraftmeßsensor enthält, der aus der von dem Vorsatz (42) herrührenden Kraft ein Ausgangssignal zur Längenveränderung der Strebe (46) mittels einer vorzugsweise elektronischen Regelvorrichtung (62) erzeugt.

2. Erntemaschine nach Anspruch 1, dadurch gekennzeichnet, daß der Kraftmeßsensor auf radial auf den Bolzen (50) gerichtete Kräfte reagiert.

3. Erntemaschine nach Anspruch 1 oder 2, dadurch gekennzeichnet, daß bei mehreren Streben (46) mehrere Bolzen (50) mit einem Kraftmeßsensor vorgesehen sind.

4. Erntemaschine nach einem oder mehreren der vorherigen Ansprüche, dadurch gekennzeichnet, daß bei mehreren unterschiedliche Kräfte übertragenden Streben (46) unterschiedlich sensible Kraftmeßsensoren oder ein Anpassungskreis in der Regelvorrichtung (52) vorgesehen sind.

5. Erntemaschine nach einem oder mehreren der vorherigen Ansprüche, dadurch gekennzeichnet, daß die Regelvorrichtung (62) bereits bei einer Eingangsspannungsänderung von 15 mV ein Verstellsignal aussendet.

6. Erntemaschine nach einem oder mehreren der vorherigen Ansprüche, dadurch gekennzeichnet, daß die Regelvorrichtung mittels eines manuell bedienbaren Schalters (64) unter Umgehung des Kraftmeßsensors bedienbar ist.

7. Erntemaschine nach einem oder mehreren der vorherigen Ansprüche, dadurch gekennzeichnet, daß der Vorsatz (42) mittels mindestens eines Nadellagers in dem Rahmen (22) gelagert ist.

8. Erntemaschine nach einem oder mehreren der vorherigen Ansprüche, dadurch gekennzeichnet, daß die Strebe (46) mittels eines Gelenklagers auf dem Bolzen (50) gelagert ist.

9. Erntemaschine nach einem oder mehreren der vorherigen Ansprüche, dadurch gekennzeichnet, daß es sich bei dem Bolzen (50) um einen elektronischen Kraftsensor der Baureihe HITCH-TRONIC Typ KS 5 der Fa. Robert Bosch GmbH handelt.

10. Verwendung eines elektronischen Kraftsensors der Baureihe HITCH-TRONIC Typ KS 5 der Fa. Robert Bosch GmbH zur Auflagedruckregelung eines Vorsatzes (42) zur Erntegutbergung an einem Mähdrescher, einem Feldhäcksler oder einer Ballenpresse, wobei der Kraftsensor aus der von dem Vorsatz (42) herrührenden Kraft ein Ausgangssignal für eine vorzugsweise elektronische Regelvorrichtung (62) zur Längenveränderung einer Strebe (46) zwischen Rahmen (22) und Vorsatz (42) der Erntemaschine (10) erzeugt.

## Claims

1. A harvesting machine (10), preferably combine, with an attachment (42) supported vertically moveable on a frame (22), and with at least one strut (46) whose length can be controlled and which has one end connected to the attachment (42) and the other end connected to the frame (22) by a pin (50) in a bearing (48) characterised in that the pin (50) includes a force sensor means which from the force produced by the attachment (42) generates an output signal for changing the length of the strut (46) preferably by means of an electronic control device (62).

2. Harvesting machine according to claim 1, characterised in that the force sensor means responds to radial forces applied to the pin (50).

3. Harvesting machine according to claims 1 or 2 characterised in that for a number of struts (46) there are provided a number of pins (50) having a force sensor means.

4. Harvesting machine according to one or more of the preceding claims, characterised in that for a number of struts (46) transmitting different forces there are provided force sensor means with different sensitivities or a matching circuit is provided in the control device (52).

5. Harvesting machine according to one or more of the preceding claims, characterised in that the control device (62) sends out an adjusting signal when the input voltage variation is 15mV.

6. Harvesting machine according to one or more of the preceding claims, characterised in that the control device can be operated by means of a manually operated switch (64), thus overriding the force sensor means.

7. Harvesting machine according to one or more of the preceding claims, characterised in that the attachment (42) is mounted on the frame (22) by means of at least one needle bearing.

8. Harvesting machine according to one or more of the preceding claims, characterised in that the strut (46) is mounted on the pin (50) by a joint bearing.

9. Harvesting machine according to one or more of the preceding claims, characterised in that the pin (50) is an electronic force sensor means of the type HITCH-TRONIC Type KS 5 of Robert Bosch GmbH.

10. Use of an electronic force sensor means of the type HITCH-TRONIC Type KS of Robert Bosch GmbH for the contact pressure control of an attachment (42) for crop harvesting connected to a combine, a forage harvester or a baler, where the force sensor means produces from the force generated in the attachment (42) an output signal for an preferably electronic control device (62) for the length adjustment of a strut (46) between frame (22) and attachment (42) of the harvesting machine (10).

## Revendications

1. Moissonneuse (10), de préférence moissonneuse-batteuse, comportant un outil adaptable (42), qui est accroché à un châssis (22) en étant déplaçable en hauteur, et au moins une entretoise (46) de longueur variable, qui est fixée, par une extrémité, à l'outil adaptable (42) et, par son autre extrémité, au châssis (22) par l'intermédiaire d'un boulon (50) dans un palier (48), caractérisée en ce que le boulon (50) contient un capteur dynamométrique, qui, à partir de la force produite par l'outil adaptable (42), produit un signal de sortie pour modifier la longueur de l'entretoise (46), au moyen du dispositif de régulation de préférence électronique (62).

2. Moissonneuse selon la revendication 1, caractérisée en ce que le capteur dynamométrique réagit à des forces dirigées radialement vers le boulon (50).

3. Moissonneuse selon la revendication 1 ou 2, caractérisée en ce que dans le cas de plusieurs entretoises (46), on prévoit plusieurs boulons (50) possédant un capteur dynamométrique.

4. Moissonneuse selon une ou plusieurs des revendications précédentes, caractérisée en ce que dans le cas de plusieurs entretoises (46) transmettant des forces différentes, on prévoit des capteurs dynamométriques ayant des sensibilités différentes ou un circuit d'adaptation dans le dispositif de régulation (52).

5. Moissonneuse selon une ou plusieurs des revendications précédentes, caractérisée en ce que le dispositif de régulation (62) émet un signal de réglage déjà pour une variation de la tension d'entrée de 15 mV.

6. Moissonneuse selon une ou plusieurs des revendications précédentes, caractérisée en ce que le dispositif de régulation peut être commandé à l'aide d'un interrupteur (64) pouvant être actionné manuellement, en contournant le capteur dynamométrique.

7. Moissonneuse selon une ou plusieurs des revendications précédentes, caractérisée en ce que l'outil adaptable (42) est monté dans le châssis (22) à l'aide d'au moins un roulement à aiguilles.

8. Moissonneuse selon une ou plusieurs des revendications précédentes, caractérisée en ce que l'entretoise (46) est montée sur le boulon (50) au moyen d'une articulation à rotule.

9. Moissonneuse selon une ou plusieurs des revendications précédentes, caractérisée en ce qu'en ce qui concerne le boulon (50), il s'agit d'un capteur de force électronique de la série HITCH-TRONIC type KS 5 de la société Robert Bosch GmbH.

10. Utilisation d'un capteur de force électronique de la série HITCH-TRONIC type KS 5 de la société Robert Bosch GmbH pour régler la pression d'appui d'un outil adaptable (42) servant à ramasser la récolte, sur une moissonneuse-batteuse, une ramasseuse-hacheuse ou une presse à balles, le capteur de force produisant, à partir de la force appliquée par l'outil adaptable (42), un signal de sortie pour un dispositif de régulation de préférence électronique (62) pour modifier la longueur d'une entretoise (46) entre le châssis (22) et l'outil adaptable (42) de la moissonneuse (10).
